# EUROPEAN PATENT SPECIFICATION

(11) **EP 3 250 523 B1**
(45) Date of publication and mention of the grant of the patent: **11.03.2020**
(21) Application number: 16701665.8
(22) Date of filing: 27.01.2016
(51) Int. Cl.: C03B 5/235, C03B 3/00, C03C 3/078, C03C 3/087, C03C 3/089, C03C 3/091, C03B 5/44

(54) **PROCESS FOR THE PREPARATION OF A SILICA MELT**
VERFAHREN ZUR HERSTELLUNG EINER SILIKATSCHMELZE
PROCÉDÉ DE PRÉPARATION DE SILICE FONDUE

(30) Priority: 27.01.2015 GB 201501307
(43) Date of publication of application: 06.12.2017
(73) Proprietor: Knauf Insulation, 4600 Visé (BE)
(72) Inventor: DEMOTT, Gerard, 1435 Mont-Saint-Guibert (BE); MAROLT, Bostjan, 1435 Mont-Saint-Guibert (BE); DUCARME, David, 1435 Mont-Saint-Guibert (BE)
(74) Representative: ARC-IP
(86) International application number: PCT/EP2016/051732
(87) International publication number: WO 2016/120348

(56) References cited:
- EP-A2- 2 397 446
- EP-B1- 1 068 154
- WO-A1-2012/131241
- WO-A1-2015/164694
- DE-A1- 10 029 983
- GB-A- 1 028 482
- US-A- 3 260 587
- US-A- 3 788 832
- US-A1- 2009 235 695
- US-A1- 2011 236 846
- US-A1- 2014 007 623
- US-A1- 2015 013 386
- R. Beekens, H. van Limpt, A. Lankhorst, P. van Santen: "Future energy-efficient and low-emissions glass melting processes" In: Charles H. Drummond: "Ceramic Engineering and Science Proceedings - 72nd Conference on Glass Problems - A Collection of Papers Presented at the 72nd Conference on Glass Problems 2012", 2012, Wiley, XP008179753, ISBN: 978-1-118-20587-7 pages 15-32, DOI: 10.1002/9781118217450.ch2, figures 4, 7

## Description

The present invention relates to a process for the preparation of a silica based melt, by making use of fine silica powder, such as fly ash and/or rice husk ash.
Fly ash is generally defined as the fine residue remaining after combustion of coal, other than the coarse bottom ash. More than about 80% by weight of the fly ash shows a particle size of less than 45 µm. Fly ash may contain some residual carbon, that is up to 25 % by weight of carbon, although such residual carbon may be undesirable in certain uses of fly ash. Its main constituent is silica. Fly ash is a waste product which is disposed off by landfill or blended into cement compositions. It has also been proposed to blend fly ash with raw materials or mineral waste for preparation of synthetic slag or other vitreous material.
Rice husk ash is the residue remaining after burning of rice husk, for example in power or steam generation units. It is composed of silica to a level of 80 to 95 and more percent. The particle size varies around 35 µm. Rice husk ash is commonly used in cement and concrete preparation, in paints, flame retardants and other applications.
EP1068154 A1 teaches a process for preparing a silica melt, whereby silica and other materials are fed into a submerged combustion melter below the level of the molten glass. WO2012131241 A1 discloses rice husk ash as glass raw material for a submerged combustion melter, whereby the D50 particle size is preferably below 50 µm, most preferably 5-10 µm. The silica content of the glass is 40-60 wt%.
There nevertheless is a need for further options for economically interesting and environmentally friendly disposal of fine silica powder containing more than 50 wt %, preferably more than 60 wt%, even more preferably more than 70 or more than 80 wt % of particles showing a particle size of less than 50 µm, preferably less than 45 µm, such as fly ash and rice husk ash, taking into consideration the difficulty of manipulating such fine powdery material.

The present invention proposes, as defined in claim 1, to prepare a silica melt comprising at least 35 wt% silica, preferably at least 40 wt% silica, more preferably at least 45 wt% silica or at least 50 wt% silica, in a submerged combustion melter comprising at least one submerged fuel burner preferably arranged in the bottom of the melter, and fine silica powder, such as fly ash and/or rice husk ash, being fed below bubbling melt level and/or below the level of the melt in the melter. At least a portion of the melt may be withdrawn from the melter and allowed to vitrify upon cooling to produce a vitrified product. The vitrified product may then be further treated as appropriate and find applications in the preparation of concrete compositions, construction elements, road constructions etc. It may further find use as vitrified raw material (essentially silica) in glass manufacturing processes, more specifically glass melting processes. The vitrified product is easier and more environmentally friendly to manipulate, transport and use than the fine powdery material, such fly ash or rice husk ash. The present invention further provides a way of disposing such fine silica powder and to find a use for it rather than to landfill it.
The process for the preparation of a silica melt may be carried out using a method and/or melter disclosed in any of WO 2015/014919, WO 2015/014920 or WO 2015/014921. Mixing fine powdery silica, like fly ash or rice husk ash with raw material for charging in a standard glass melter, for instance over the top of the melt, appears inappropriate as the flue gases from the melt entrain the light powdery material out of the melter equipment. Looking at submerged combustion melters, loading a raw material batch comprising fine powdery silica from above the melt level appears even less suitable because of the high turbulence of the melt bath and the elevated flue gas flow which tends to draw light powdery material out of the system. Blowing fly ash or rice husk ash which still shows a reduced carbon content as fuel through the bottom burners of a submerged combustion burner is likely to eject the ash out of the system because of the high gas velocities generated in such submerged combustion burners.
Submerged combustion melters are known. These melters are characterized by the fact that they have one or more burner nozzles arranged below the melt level, preferably in the melter bottom, such that the burner flame and/or combustion products pass through the melt and transfer energy directly to the melt. The submerged combustion melter further ensures efficient mixing in the melt, and homogenizes the melt in terms of temperature profile and composition. It also favors the absorption of raw material into the melt thereby reducing the risk of dust particles escaping through the chimney, and improves heat transfer to fresh raw material. This reduces required residence time in the melter prior to withdrawal for downstream treatment and/or forming.
It has now been found that the fine silica powder may advantageously be introduced below the bubbling melt level and/or below the melt level, preferably by a screw feeder or a hydraulic feeder, without any prior conditioning or preparation, into a submerged combustion melter comprising submerged burners arranged in the bottom of the melter.
In this context, "below the bubbling melt level" is understood to mean below the highest point from the melter bottom, reached by the bubbling and/or foamy mass of the melt, during operation of the melter.
In an illustrative embodiment, the fine silica powder is introduced below the melt level, meaning at a height from the bottom of the melter, at which liquid melt is continuously in contact with the melter side walls, during operation of the melter.

The melt contained in the submerged combustion melter is advantageously maintained in a turbulent state. It is known that submerged combustion generates high agitation and turbulence in the melt bath, because of the combustion gases injected at high pressure into the melt and because of convection flows thereby generated in the melt. Preferably, the submerged burners are controlled such that the volume of the turbulent melt is at least 8%, more preferably at least 10%, even more preferably at least 15%, higher than the volume would have without any burners firing. It has been found that the gas injection into the liquid melt and the convection flows thereby generated in the melt reduce the density thereof. Suitable control of the oxy-fuel burners generates the desired density reduction or volume increase. Preferably, the process is run such that no significant foam layer or no foam layer at all is generated over the top of the melt level. It has been found that such a foam layer is disadvantageous for the energy transfer within the melter, and hence the efficiency thereof.

For the sake of clarity and completeness, the level the melt would have when no burners are firing may be calculated on the basis of the melt composition and/or verified by allowing the melt to freeze in the melter. The level of turbulent melt may be determined by an appropriate measuring device, such as a known laser pointer or similar device, which averages melt levels over a given period of time, such as 1 or 5 minutes.

The increased volume or reduced density of the melt bath is considered a reflection of the turbulence level in the melt; the more turbulent the melt, the more gas bubbles are absorbed within the melt and thus "aerate" the melt. A reduced foam layer over the top of the melt level further reflects that the gas bubbles generated by the gas injection are maintained within the melt bath, rather than to accumulate on the surface thereof.

Fly ash may comprise, in addition to carbon and silica, many different oxides, metals and other materials in minor quantities. The same applies to rice husk ash. The present invention envisages to melt the fine powdery silica raw material together with fluxing agent, without any significant addition of further mineral materials. The word "significant" as used in this context should be understood to mean less than 5 % by weight of the fly ash-fluxing agent composition, or less than 3 %, preferably less than 2 %, more preferably less than 1 %. Fluxing agents are known from the glass manufacturing industry. They are used to reduce melt viscosity and energy demand to achieve desired viscosity at lower temperature. Illustratively, fluxing agents may be selected from sodium oxide, potassium oxide, lithium oxide, lead oxide, zinc oxide, calcium oxide, barium oxide, magnesium oxide, strontium oxide and boron oxide, and combinations thereof.

The person having experience and skill in the art of glass melting is capable of selecting the appropriate fluxing agent in view of the desired application of the finally obtained vitrified composition. Some oxides serving as fluxing agents may actually not be desired in certain final applications. As an example, B₂O₃ is a preferred fluxing agent, but in certain final applications of glass prepared with molten fine silica powder, boron may be undesirable; in such instances, different fluxing agents, such as K₂O and/or Na₂O and/or CaO, may be used.

Similarly, the content of fluxing agent may vary between 0.5 and 25 wt % of the composition, preferably between 0.5 and 20 wt %, or between 1.0 and 15 wt %.

In an alternative invention process, the fine powdery silica may be introduced into a glass melt or stone melt, in a submerged combustion melter as disclosed here above. That means that the fine powdery silica is fed into the said melter and that additional vitrifiable raw material is also fed to the said melter. The additional vitrifiable raw material may be discharged from above the melt. In the alternative, additional vitrifiable raw material may be charged via a feeder arranged below bubbling level of melt or below melt level.

The melting chamber walls may advantageously be cooled and comprise double steel walls separated by circulating cooling liquid, preferably water. Particularly in the case of a cylindrical melting chamber, such assembly is relatively easy to build and is capable of resisting high mechanical stresses. A cylindrical shape of the melter facilitates balance of stresses on the outside wall. As the walls are cooled, for example water cooled, melt preferably solidifies and forms a protective layer on the inside of the melter wall. The melter assembly may not require any internal refractory lining and therefore needs less or less costly maintenance. The internal face of the melter wall may advantageously be equipped with tabs or pastilles or other small elements projecting towards the inside of the melter. These may help in constituting and fixing a layer of solidified melt on the internal melter wall generating a lining having thermal resistance and reducing the transfer of heat to the cooling liquid in the double walls of the melter.

The melter may be equipped with heat recovery equipment. Hot fumes from the melter may be used to preheat raw material or the thermal energy contained in them may be recovered otherwise. It is noted that fly ash may still show a certain carbon concentration. That carbon is oxidized in the course of the melting process, thereby generating heat which is partially transferred to the melt and partially escapes with the flue gases.

Similarly, the thermal energy contained in the cooling liquid circulating between the two walls of the melter may also be recovered for raw material heating or other purposes.

Overall the energy efficiency of submerged combustion melters is significantly improved compared to other melters.

As will be apparent to the person skilled in the art, the flue gas composition is advantageously controlled and flue gas may advantageously be treated prior to escape in the environment.

Melt may be withdrawn continuously or batch wise from the melter. The melt outlet is preferably arranged opposite the raw material inlet. In the case of discontinuous discharge of melt, a discharge opening maybe controlled by, for example, a ceramic piston. In the alternative a syphon-type discharge may be used which controls the melt level in the melter.

The submerged burners preferably inject high pressure jets of combustion products into the melt that is sufficient to overcome the liquid pressure and to create forced upward travel of the flame and combustion products. The speed of the combustion and/or combustible gases, notably at the exit from the burner nozzle(s), may be ≥ 60 m/s, ≥ 100 m/s or ≥ 120 m/s and/or ≤350 m/s, ≤330 m/s, ≤300 or ≤200 m/s. Preferably the speed of the combustion gases is in the range of about 60 to 300 m/s, preferably 100 to 200, more preferably 110 to 160 m/s.

The temperature of the melt may be between 1200°C and 1600°C; it may be at least 1350°C or 1400°C and/or no more than 1550°C or 1520°C.

According to a preferred embodiment, the submerged combustion is performed such that a substantially toroidal melt flow pattern is generated in the melt, having a substantially vertical central axis of revolution, comprising major centrally inwardly convergent flows at the melt surface; the melt moves downwardly at proximity of the vertical central axis of revolution and is recirculated in an ascending movement back to the melt surface, thus defining a substantially toroidal flow pattern.

The generation of such a toroidal flow pattern ensures highly efficient mixing of the melt and absorption of raw material, including fine powdery silica, into the melt, and homogenizes the melt in terms of temperature profile and composition.

Advantageously, the melting step comprises melting the fine silica powder, such as fly ash and/or rice husk ash, as described above, in a submerged combustion melter comprising at least one bottom burner, by subjecting the melt to a flow pattern which when simulated by computational fluid dynamic analysis shows a substantially toroidal melt flow pattern in the melt, comprising major centrally inwardly convergent flow vectors at the melt surface, with the central axis of revolution of the toroid being substantially vertical.

At the vertical axis of revolution of said toroidal flow pattern, the flow vectors have a downward component reflecting significant downward movement of the melt in proximity of said axis. Towards the melter bottom, the flow vectors change orientation showing outward and then upward components.

Preferably the fluid dynamics model is code ANSYS R14.5, taking into consideration the multi-phase flow field ranging from solid batch material to liquid melt and gas generated in the course of the conversion, and the batch-to-melt conversion.

A toroidal melt flow pattern may be obtained using submerged combustion burners arranged at the melter bottom in a substantially annular burner zone imparting a substantially vertically upward directed speed component to the combustion gases. Advantageously, the burners are arranged with a distance between adjacent burners of about 250 - 1250 mm, advantageously 500 - 900 mm, preferably about 600 - 800, even more preferably about 650 - 750 mm. It is preferred that adjacent flames do not merge.

It has been found that the burner arrangement and control to obtain the above described toroidal melt flow pattern may ensure appropriate mixing in the melt as well as the required turbulence to sufficiently increase the melt volume (or reduce the melt density) to reach the objective of the present invention. Foam formation is particularly reduced, as the gas bubbles reaching the top of the melt are reabsorbed and mixed within the melt as a result of the toroidal flow pattern.

Each burner axis and/or a speed vector of the melt moving upwards over or adjacent to the submerged burners may be slightly inclined from the vertical, for example by an angle which is ≥1°, ≥2°, ≥3° or ≥5 and/or which is ≤ 30°, preferably ≤ 15°, more preferably ≤10°, notably towards the center of the melter. Such an arrangement may improve the flow and directs melt flow away from the outlet opening and/or towards a center of the melter thus favoring a toroidal flow and incorporation of raw material, including fine powdery silica particles, in to the melt.

According to one embodiment, each central burner axis is inclined by a swirl angle with respect to a vertical plane passing through a central vertical axis of melter and the burner center. The swirl angle may be ≥1°, ≥2°, ≥3°, ≥5° and/or ≤ 30°, ≤ 20°, ≤ 15° or ≤ 10°. Preferably, the swirl angle of each burner is about the same. Arrangement of each burner axis at a swirl angle imparts a slightly tangential speed component to the upward blowing flames, thus imparting a swirling movement to the melt, in addition to the toroidal flow pattern.

The burner zone is defined as a substantially annular zone. Burner arrangements, for example on an elliptical or ovoid line within the relevant zone are possible, but the burners are preferably arranged on a substantially circular burner line.

Preferably, the flow pattern comprises an inwardly convergent flow at the melt surface followed by a downwardly oriented flow in proximity of the central axis of revolution of the toroid. Said central axis of revolution advantageously corresponds to the vertical axis of symmetry of the melter. By axis of symmetry is meant the central axis of symmetry and, if the melter shows a transversal cross-section which does not have any single defined axis of symmetry, then the axis of symmetry of the circle in which the melter section is inscribed. The downwardly oriented flow is followed by an outwardly oriented flow at the bottom of the melter and a substantially annular upward flow at proximity of the burners, reflecting recirculation of melt toward the burner zone and in an ascending movement back to the melt surface, thus defining a substantially toroidal flow pattern.

The inwardly convergent flow vectors at the melt surface advantageously show a speed comprised between 0.1-3 m/s. The downward oriented speed vectors at proximity of the vertical central axis of revolution are preferably of significant magnitude reflecting a relatively high speed of material flowing downwardly. The downward speed vectors may be between 0.1-3 m/s. The melt and/or the raw materials within the melter, at least at one portion of the melter and notably at the melt surface (particularly inwardly convergent flow vectors at the melt surface) and/or at or proximate a vertical central axis of revolution, may reach a speed which is ≥0.1 m/s, ≥0.2 m/s, ≥0.3 m/s or ≥0.5 m/s and/or which is ≤2.5 m/s, ≤2 m/s, ≤1.8 m/s or ≤1.5 m/s.

The preferred toroidal flow pattern ensures highly efficient mixing and homogenizes the melt in terms of temperature profile and composition. It also favors the absorption of raw material into the melt thereby reducing the risk of fine powdery ash escaping through the chimney, and improves heat transfer to fresh raw material and melt. This reduces required residence time in the melter prior to withdrawal, while avoiding or at least reducing the risk of raw material short cutting the melt circulation. As mentioned above, foam formation at the top of the melt is reduced and gas bubbles are maintained within the melt, thus reducing melt density as desired.

In one preferred embodiment, the burners are arranged in the melter bottom, at a distance of about 250 - 750 mm from the side wall of said melting chamber; this favors the preferred flow described above and avoids flame attraction to the melting chamber side walls. Too small a distance between burners and side wall may damage or unnecessarily stress the side wall. While a certain melt flow between burner and wall may not be detrimental and may even be desirable, too large a distance will tend to generate undesirable melt flows and may create dead zones which mix less with the melt in the center of the melter and lead to reduced homogeneity of the melt.

The distance between submerged burners is advantageously chosen such as to provide the desired toroidal flow pattern within the melt but also to avoid that adjacent flames merge. While this phenomenon depends on many parameters such as temperature and viscosity of the melt, pressure and other characteristics of the burners, it has been found advantageous to select a burner circle diameter comprised between about 1200 and 2000 mm. Depending on burner type, operating pressure and other parameters, too large a diameter will lead to diverging flames; too narrow a diameter will lead to merging flames.

Preferably at least 6 burners are provided, for example arranged on a burner circle line, more preferably 6 to 10 burners, even more preferably 6 to 8 burners, depending on the melter dimensions, burner dimensions, operating pressure and other design parameters.

Each burner or each of a plurality of a group of burners, for example opposed burners, may be individually controlled. Burners close to a raw material discharge may be controlled at different, preferably higher gas speeds and/or pressures than adjacent burners, thus allowing for improved heat transfer to the fresh raw material that is being loaded into the melter. Higher gas speeds may be required only temporarily, that is, in the case of batch wise loading of fresh raw material, just during the time period required for absorption of the relevant load into the melt contained in the melter.

It may also be desirable to control burners that are located close to a melt outlet at a lower gas speed/pressure in order not to disturb the outlet of the melt.

The melting chamber is preferably substantially cylindrical in cross section; nevertheless, it may have an elliptical cross section or polygonal cross section showing more than 4 sides, preferably more than 5 sides.

An embodiment of a melter suitable for use in accordance with the present invention is described below, with reference to the appended drawings of which:
Figures 1a and 1b are schematic representations of a toroidal flow pattern;

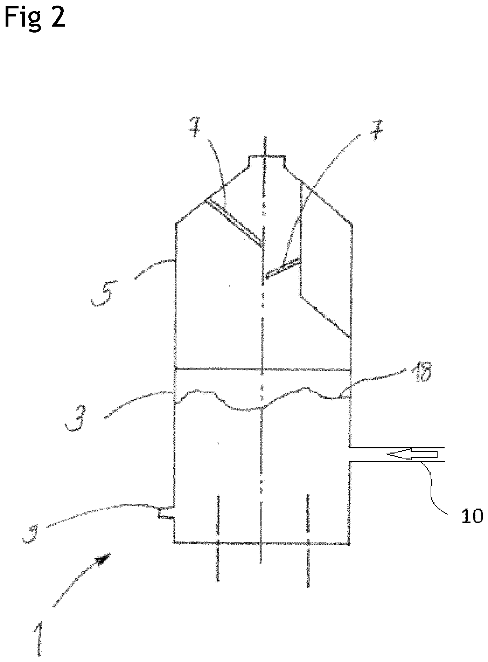

Figure 2 shows a vertical section through a melter; and

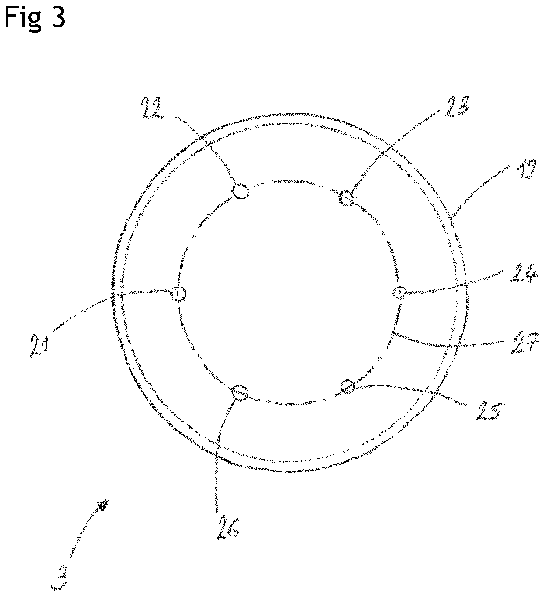

Figure 3 is a schematic representation of a burner layout.

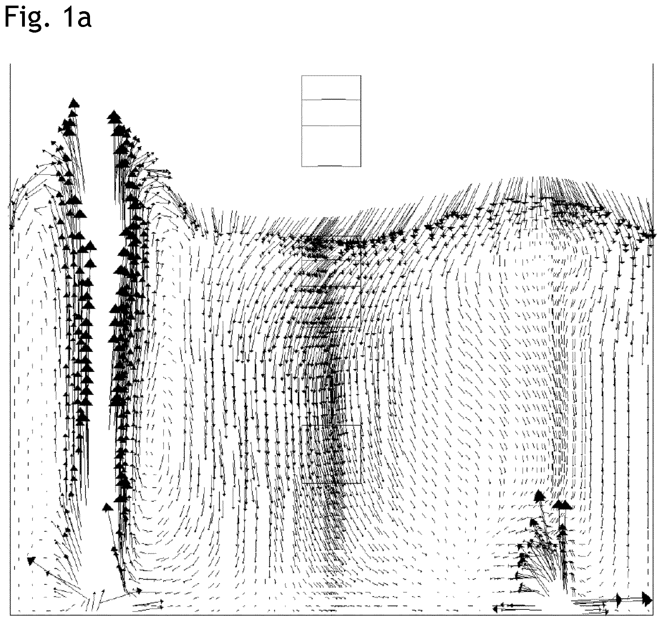

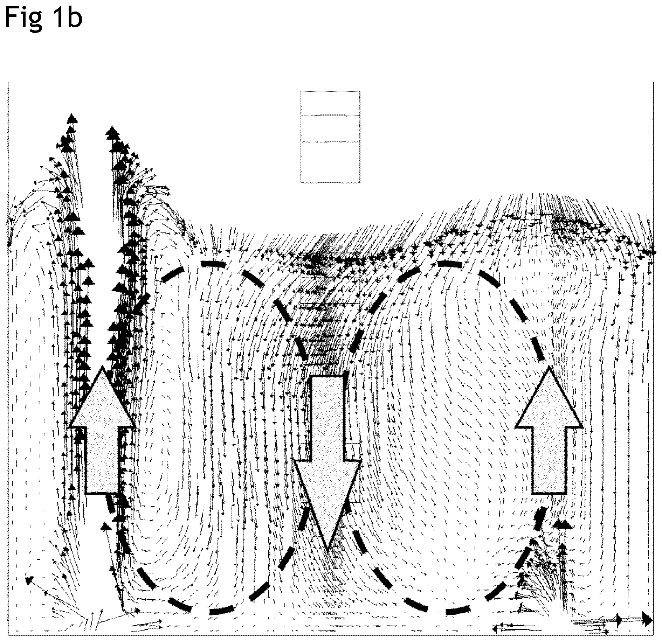

With reference to Figs 1a and 1b, a toroidal flow pattern is preferably established in which melt follows an ascending direction close to submerged burners 21, 22, 23, 24, 25, 26 which are arranged on a circular burner line 27, flows inwardly towards the center of the circular burner line at the melt surface, and flows downwards in the proximity of the said center. The toroidal flow generates agitation and turbulence in the melt, ensures good stirring of the melt, and absorption of raw material and gas bubbles into the melt.

The illustrated melter 1 comprises: a cylindrical melting chamber 3 having an internal diameter of about 2.0 m which contains the melt; an upper chamber 5; and a chimney for evacuation of the fumes. The upper chamber 5 is equipped with baffles 7 that prevent any melt projections thrown from the melt surface 18 being entrained into the fumes. A raw material feeder 10 is arranged in the melting chamber wall, below the bubbling melt level and is designed to load fresh powdery ash and fluxing agent into the melter 1. A powdery or fine raw material feeder may be arranged below the melt level and/or between melt level and bubbling level of melt. The feeder 10 comprises a horizontal feeding means, for example a feed screw or a piston, which transports the fly ash and/or the rice husk ash possibly admixed with fluxing agent and/or other raw materials for preparation of a glass melt, directly into the melt. The bottom of the melting chamber comprises six submerged burners 21, 22, 23, 24, 25, 26 arranged on a circular burner line 27 concentric with the melter axis and having a diameter of about 1.4 m. The melt may be withdrawn from the melting chamber 3 through a controllable outlet opening 9 located in the melting chamber side wall, close to the melter bottom, substantially opposite the feeding device 10. The melt withdrawn from the melter may then be allowed to cool and solidify and possibly ground as required for downstream use. Such downstream use may include cullet preparation for later use in glass manufacturing. It may also include actual use of the melt for glass formation, including fiberization as is known per se. Other uses include grinding of the vitrified material for use in cement and/or concrete compositions, construction materials etc.

The temperature within the melt may be between 1200°C and 1600°C, depending on the composition of the melt, desired viscosity and other parameters. Preferably, the melter wall is a double steel wall cooled by a cooling liquid, preferably water. Cooling water connections provided at the external melter wall allow a flow sufficient to withdraw energy from the inside wall such that melt can solidify on the internal wall and the cooling liquid, here water, does not boil.
The submerged burners comprise concentric tube burners operated at gas flows of 100 to 200 m/s, preferably 110 to 160 m/s and generate combustion of fuel gas and oxygen containing gas within the melt. The combustion and combustion gases generate agitation within the melt before they escape into the upper chamber and then through the chimney. These hot gases may be used to preheat the raw material and/or the fuel gas and/or oxidant gas (e.g. oxygen, industrial oxygen have an oxygen content ≥ 95% by weight or oxygen enriched air) used in the burners. The fumes are preferably filtered or otherwise treated prior to release to the environment, optionally using dilution with ambient air to reduce their temperature prior to filtering.

It has been determined that in a melter used in a process as described and controlled as per the invention requirements, the melt level is increased by 30 - 50 % as compared to the level the melt would have at the same temperature when no burners are firing. The melt level with no burners firing has been calculated on the basis of the melt composition and has been verified by letting the melt harden in the melter. The level of the turbulent "aerated" melt has been determined in normal operating mode, by a laser pointer averaging the measured values over a 5 minutes time period. Similar devices would be appropriate to. Interestingly, the melt flow pattern as desired does not generate any significant foam over the melt level. It is understood that the gas bubbles are reabsorbed into the melt by the relevant flows, rather than to be allowed to accumulate over the top of the melt.
The above described production process is energy efficient due to the choice of submerged combustion melters that allow for improved energy transfer to the melt, shorter residence times and thus less heat loss, and because the high stirring and turbulence lead to a more homogenous melt at reduced melt viscosity, which in turn may allow for operation at reduced temperatures. Furthermore, submerged combustion may advantageously be performed in water-cooled melters which are easier and less costly to maintain and repair and which further allow for recycling of the energy withdrawn from the cooling fluid. Furthermore, the underlevel feeding of the powdery ash material reduces the risk of contamination of the fumes, and eases the incorporation of the powdery ash material into the melt with concomitant energy transfer to the freshly charged material.
As a first example, the vitrified product obtained comprises 73 wt% SiO₂, 22 wt% B₂O₃, 1.5 wt% Na₂O and K₂O, and trace amounts of other oxides, adding up to 100 wt%. Such vitrified product may be used as such or may be further combined with raw materials to produce other glass compositions.

As an alternative example, the use of CaO, MgO, and Na₂O and/or K₂O as fluxing agents may lead to a composition as follows: 69 wt % SiO₂, 8 wt % CaO, 2 wt % MgO, 15 wt% Na₂O + K₂O, and trace amounts of other oxides to add up to 100 wt%.

As a further example, fly ash, Al₂O₃, B₂O₃, CaO, MgO and Na₂O and K₂O may be mixed in suitable proportions to produce a C-glass composition at the outlet of the submerged combustion melter equipped with bottom burners as described above. A typical C-glass composition comprises 64-68 wt% SlO₂, 3-5 wt% Al₂O₃, 4-6 wt% B₂O₃, 11-15 wt% CaO, 2-4 MgO, 7-10 wt% Na₂O+K₂O and trace amounts of other oxides to add up to 100%.

Similarly, rice husk ash, Al₂O₃, B₂O₃, CaO, MgO and Na₂O and K₂O may be mixed in suitable proportions to produce a E-glass composition at the outlet of the submerged combustion melter equipped with bottom burners as described above. A typical E-glass composition comprises 52-62 wt% SlO₂, 12-16 wt% Al₂O₃, 0-10 wt% B₂O₃, 16-25 wt% CaO, 0-5 MgO, 0-2 wt% Na₂O+K₂O and trace amounts of other oxides to add up to 100%.

## Claims

1. Process for the preparation of a silica melt comprising at least 35 wt% silica, preferably at least 40 wt% silica, more preferably at least 45 wt% silica or at least 50 wt% silica, wherein fine silica powder containing more than 50 wt%, preferably more than 60 wt%, even more preferably more than 70 or more than 80 wt% of particles showing a particle size of less than 50 µm, preferably less than 45 µm, notably fly ash and/or rice husk ash, is fed below bubbling melt level in a submerged combustion melter comprising at least one submerged burner arranged in the bottom of the melter.

2. Process according to claim 1 wherein the at least one submerged burner is controlled such as to maintain the melt in a turbulent state such that the volume of the turbulent melt is at least 8%, preferably at least 10%, more preferably at least 15% higher than the level the melt would have if no burners are firing.

3. Process according to any of claims 1 - 2, wherein the submerged burners are controlled such that no foam layer is generated over the top of the melt level.

4. Process according to any of claims 1 - 3, further comprising one of the following features:
- a fluxing agent is introduced into the melt, preferably in combination with the fine silica powder;
- a fluxing agent is selected from sodium oxide, potassium oxide, lithium oxide, lead oxide, zinc oxide, calcium oxide, barium oxide, magnesium oxide, strontium oxide and boron oxide, and combinations thereof is introduced into the melt;
- a fluxing agent is selected from sodium oxide, potassium oxide, lithium oxide, lead oxide, zinc oxide, calcium oxide, barium oxide, magnesium oxide, strontium oxide and boron oxide, and combinations thereof is introduced into the melt in an amount ranging between 0.5 and 25 wt % of the composition, preferably between 0.5 and 20 wt %, or between 1.0 and 15 wt %.

5. Process according to any preceding claim comprising feeding additional vitrifiable raw material into the melter and preferably the process further comprises:
- feeding the additional vitrifiable raw material above the melt level in the melter; or
- feeding the vitrifiable raw material below the bubbling melt level, advantageously below the melt level.

6. Process according to any preceding claim, wherein at least a portion of the melt is withdrawn from the melter and allowed to vitrify upon cooling to produce a vitrified product, and notably wherein the vitrified product is further treated as appropriate for the preparation of concrete compositions, construction elements, for road constructions, or for use as vitrified raw material in glass manufacturing processes, more specifically glass melting processes.

7. Process according to any preceding claim wherein the melting chamber walls are cooled, for example comprise double steel walls separated by circulating cooling liquid, preferably water, the energy withdrawn by the cooling liquid being preferably recycled, and the inner melter walls are not lined with refractory material.

8. Process according to any preceding claim wherein heat is recovered from the hot fumes and/or from the cooling liquid.

9. Process according to any preceding claim wherein part at least of the melt is withdrawn continuously or batchwise from the melter.

10. Process according to any preceding claim wherein the submerged combustion is performed such that a substantially toroidal melt flow pattern is generated in the melt, having a substantially vertical central axis of revolution, comprising major centrally inwardly convergent flows at the melt surface; the melt moves downwardly at proximity of the vertical central axis of revolution and is recirculated in an ascending movement back to the melt surface, thus defining a substantially toroidal flow pattern.

11. Process according to any preceding claim wherein the melting step comprises melting the fine silica powder material, in a submerged combustion melter by subjecting the melt to a flow pattern which shows a substantially toroidal melt flow pattern in the melt, comprising major centrally inwardly convergent flow vectors at the melt surface, with the central axis of revolution of the toroid being substantially vertical, and notably wherein towards the melter bottom, the flow vectors change orientation showing outward and then upward components, the melt flow pattern being determined by simulation by computational fluid dynamics analysis.

12. Process according to any preceding claim wherein :
- submerged combustion burners are arranged at the melter bottom in a substantially annular burner zone, preferably on a burner circle; and/or
- the burners are arranged with a distance between adjacent burners of 250 - 1250 mm, advantageously 500 - 900 mm, preferably 600 - 800, even more preferably 650
- 750 mm.

13. Process according to any preceding claim wherein each burner axis and/or a speed vector of the melt moving upwards over or adjacent to the submerged burners is slightly inclined from the vertical, for example by an angle which is ≥1°, ≥2°, ≥3° or ≥5 and/or which is ≤ 30°, preferably ≤ 15°, more preferably ≤10°, notably towards the center of the melter.

14. Process according to any preceding claim wherein each central burner axis is inclined by a swirl angle with respect to a vertical plane passing through a central vertical axis of melter and the burner center, the swirl angle being ≥1°, ≥2°, ≥3°, ≥5° and/or ≤ 30°, ≤ 20°, ≤ 15° or ≤ 10°.

## Patentansprüche

1. Verfahren zur Herstellung einer Siliciumdioxidschmelze mit wenigstens 35 Gew. % Siliciumdioxid, vorzugsweise wenigstens 40 Gew.% Siliciumdioxid, eher bevorzugt wenigstens 45 Gew. % Siliciumdioxid oder wenigstens 50 Gew. % Siliciumdioxid, wobei feines Siliciumdioxidpulver mit mehr als 50 Gew. %, vorzugsweise mehr als 60 Gew. %, eher bevorzugt mehr als 70 oder mehr als 80 Gew. %, der Partikel aufweisend eine Teilchengrösse von weniger als 50 *µ*m, vorzugsweise weniger als 45 *µ*m, insbesondere Flugasche und/oder Reiskleienasche, unterhalb des sprudelnden Schmelzbadspiegels in einen Tauchverbrennungsschmelzofen eingeführt wird, der mindestens einen Tauchbrenner im Boden aufweist.

2. Verfahren nach Anspruch 1 wobei der mindestens eine Tauchbrenner so gesteuert wird, dass die Schmelze in einen turbulenten Zustand gehalten wird, so dass das Volumen der turbulenten Schmelze mindestens 8%, vorzugsweise mindestens 10%, mehr bevorzugt mindestens 15% grösser ist als das Volumen der Schmelze wenn keine Brenner feuern.

3. Verfahren nach einem der Ansprüche 1 - 2, wobei die Tauchbrenner so gesteuert sind, dass keine Schaumschicht auf dem Schmelzspiegel erzeugt wird.

4. Verfahren nach einem der Ansprüche 1 - 3 weiter eine der folgenden Kennzeichen aufweisend :
- ein Flussmittel wird in die Schmelze eingeführt, vorzugsweise in Kombination mit dem feinen Siliciumdioxidpulver;
- ein Flussmittel ausgesucht aus Natriumoxid, Kaliumoxid, Lithiumoxid, Bleioxid, Zinkoxid, Calciumoxid, Bariumoxid, Magnesiumoxid, Strontiumoxid und Boroxid, und Kombinationen davon, wird in die Schmelze eingeführt;
- ein Flussmittel ausgesucht aus Natriumoxid, Kaliumoxid, Lithiumoxid, Bleioxid, Zinkoxid, Calciumoxid, Bariumoxid, Magnesiumoxid, Strontiumoxid und Boroxid, und Kombinationen davon, wird in die Schmelze eingeführt, in einer Menge im Bereich zwischen 0,5 und 25 Gew.% der Zusammensetzung, vorzugsweise zwischen 0,5 und 20 Gew.% oder zwischen 1,0 und 15 Gew.%.

5. Verfahren nach einem der vorhergehenden Ansprüche aufweisend die Einführung zusätzlicher verglasbarer Rohmaterialien in den Schmelzofen, und vorzugsweise weiter:
- die Einführung der zusätzlichen verglasbaren Rohmaterialien in den Schmelzofen, über den Schmelzspiegel;
oder
- die Einführung der verglasbaren Rohmaterialien unterhalb des sprudelnden Schmelzspiegels, vorteihafterweise unterhalb des Schmelzspiegels.

6. Verfahren nach einem der vorhergehenden Ansprüche, wobei mindestens ein Teil der Schmelze aus dem Schmelzofen abgezogen wird und durch Abkühlen verglast wird zur Herstellung eines verglasten Produktes, und wobei insbesondere das verglaste Product entsprechend weiter behandelt wird zur Herstellung von Betonzusammensetzungen, Bauelementen, für den Strassenbau oder für die Verwendung als verglastes Rohmaterial in Glasherstellungsverfahren, insbesondere Glasschmelzverfahren.

7. Verfahren nach einem der vorhergehenden Ansprüche, wobei die Schmelzkammerwände gekühlt sind, zum Beispiel durch zirkulierende Kühlflüssigkeit, bevorzugt Wasser, getrennte Doppelstahlwände aufweisen, und die durch die Kühlflüssigkeit abgezogene Energie vorzugsweise wiederverwendet wird, und die Innenwände des Schmelzofens nicht mit feuerfestem Material ausgekleidet sind.

8. Verfahren nach einem der vorhergehenden Ansprüche, wobei Wärme aus den warmen Abgasen und/oder aus der Kühlflüssigkeit zurückgewonnen wird.

9. Verfahren nach einem der vorhergehenden Ansprüche, wobei mindestens ein Teil der Schmelze kontinuierlich oder diskontinuierlich aus dem Schmelzofen abgezogen wird.

10. Verfahren nach einem der vorhergehenden Ansprüche, wobei die Taucverbrennung derart durchgeführt wird, dass ein im Wesentlichen toroidales Strömungsbild in der Schmelze erzeugt wird, mit einer im Wesentlichen vertikalen zentralen Rotationsachse, wobei das toroidale Strömungsbild einen Haupteil der Strömungsvektoren aufweist, die an der Schmelzoberfläche zentral nach Innen konvergieren, die Schmelze sich in der Nähe der zentralen vertikalen Rotationsachse nach unten bewegt und in eine nach Oben gerichtete Bewegung zur Schmelzoberfläche zurück zirkuliert wird, wobei somit ein im Wesentlichen toroidales Strömungsbild erzeugt wird .

11. Verfahren nach einem der vorhergehenden Ansprüche wobei der Schmelzschritt das Schmelzen des feinen Siliciumdioxidpulvermaterials in einem Tauchverbrennungsschmelzofen umfasst, wobei die Schmelze einem Strömungsbild unterworfen wird, das ein toroidales Strömungsbild in der Schmelze darstellt, welches einen Haupteil der Strömungsvektoren aufweist, die an der Schmelzoberfläche zentral nach Innen konvergieren, wobei die zentrale Rotationsachse des Torus im Wesentlichen vertikal ist, und wobei insbesondere die Strömungsvektoren in der Nähe des Schmelzofenbodens ihre Richtung ändern und nach Aussen gerichtete und dann nach Oben gerichtete Kompnenten aufweisen, wobei das Strömungsbild durch Simulation unter Verwendung einer numerischen Analyse der Strömungsdynamik bestimmt wird.

12. Verfahren nach einem der vorhergehenden Ansprüche wobei:
- Tauchbrenner am Schmelzofenboden in einer im Wesentlichen ringförmigen Brennerzone, vorzugsweise auf einem Brennerkreis, angeordnet sind ; und/oder
- die Tauchbrenner in einem Abstand zwischen benachbarten Brennern von 250 - 1250 mm, vorteilhafterweise von 500 - 900 mm, vorzugsweise von 600 - 800, eher bevorzugt von 650 - 750 mm, angeordnet sind.

13. Verfahren nach einem der vorhergehenden Ansprüche wobei jede Brennerachse und/oder ein Geschwindigkeitsvektor der sich über oder in der Nähe des Tauchbrenners nach oben bewegenden Schmelze leicht zur Vertikalen, zum Beispiel um einen Winkel, der ≧ 1°, ≧ 2°, ≧ 3° oder ≧ 5° und/oder der ≦ 30°, vorzugsweise ≦ 15°, mehr bevorzugt ≦ 10°, insbesondere zur Mitte des Schmelzofens hin geneigt ist.

14. Verfahren nach einem der vorhergehenden Ansprüche wobei jede zentrale Brennerachse um einen Wirbelwinkel zu einer vertikalen Ebene geneigt ist, die durch die mittige vertikale Schmelzofenachse und die Brennermitte verläuft, wobei der Wirbelwinkel ≧ 1°, ≧ 2°, ≧ 3°, ≧ 5° und/oder ≦ 30° , ≦ 20° , ≦ 15° ou ≦ 10°.

## Revendications

1. Procédé pour la préparation d'un bain fondu à base de silice comportant au moins 35% en poids de silice, de préférence au moins 40 % en poids de silice, plus particulièrement au moins 45 % en poids ou au moins 50 % en poids de silice, dans lequel on alimente une fine poudre de silice comportant plus de 50 % en poids, de préférence plus de 60 % en poids, plus particulièrement plus de 70 ou plus de 80 % en poids de particules ayant une dimension de particule de moins de 50 *µ*m, de préférence de moins de 45 *µ*m, notamment des cendres volantes et/ou des cendres de cosses de riz, sous le niveau du bain fondu bouillonnant, dans un four de fusion à combustion immergée comportant au moins un brûleur immergé agencé dans le fond du four de fusion.

2. Procédé selon la revendication 1 dans lequel ledit au moins un brûleur immergé est commandé de manière à maintenir le bain fondu dans un état turbulent de telle sorte que le volume du bain fondu turbulent est au moins 8%, de préférence au moins 10 %, plus particulièrement au moins 15 % plus élevé que le niveau que le bain fondu aurait si aucun brûleur ne fonctionnait.

3. Procédé selon l'une des revendications 1 - 2 dans lequel les brûleurs immergés sont commandés de sorte qu'aucune couche de mousse n'est générée au-dessus du bain fondu.

4. Procédé selon l'une des revendications 1 - 3 présentant l'une des caractéristiques supplémentaires suivantes :
- on introduit un agent fondant dans le bain fondu, de préférence en combinaison avec la fine poudre de silice ;
- on introduit un agent fondant choisi parmi l'oxyde de sodium, l'oxyde de potassium, l'oxyde de lithium, l'oxyde de plomb, l'oxyde de zinc, l'oxyde de calcium, l'oxyde de baryum, l'oxyde de magnésium, l'oxyde de strontium et l'oxyde de bore, et des combinaisons de ceux-ci, dans le bain fondu ;
- on introduit un agent fondant choisi parmi l'oxyde de sodium, l'oxyde de potassium, l'oxyde de lithium, l'oxyde de plomb, l'oxyde de zinc, l'oxyde de calcium, l'oxyde de baryum, l'oxyde de magnésium, l'oxyde de strontium et l'oxyde de bore, et des combinaisons de ceux-ci, dans le bain fondu, en une quantité comprise entre 0,5 et 25 % en poids de la composition, de préférence entre 0,5 et 20 % en poids ou entre 1,0 et 15 % en poids.

5. Procédé selon l'une des revendications précédentes comportant l'alimentation de matière première vitrifiable supplémentaire dans le four à fusion et le procédé comprenant encore :
- l'alimentation de matière première vitrifiable supplémentaire au-dessus du niveau du bain fondu dans le four de fusion ;
ou
- l'alimentation de matière première vitrifiable sous le niveau bouillonnant du bain fondu, avantageusement sous le niveau du bain fondu.

6. Procédé selon l'une des revendications précédentes, dans lequel au moins une partie du bain fondu est soutirée du four de fusion et soumise à la vitrification par refroidissement afin de produire un produit vitrifié, et notamment dans lequel le produit vitrifié est traité de manière appropriée en vue de la préparation de compositions de béton, d'éléments de construction, de constructions de routes , ou pour usage comme matière première vitrifiée dans des procédés de production de verre, plus particulièrement des procédés de fusion de verre.

7. Procédé selon l'une des revendications précédentes dans lequel les parois de la chambre de fusion sont refroidies, comprennent par exemple des doubles parois en acier séparées par un liquide de refroidissement circulant, de préférence de l'eau, l'énergie extraite par le liquide de refroidissement étant de préférence recyclée, et les parois internes du four de fusion n'étant pas recouvertes de matériau réfractaire.

8. Procédé selon l'une des revendications précédentes dans lequel de la chaleur est récupérée des fumées chaudes et/ou du liquide de refroidissement.

9. Procédé selon l'une des revendications précédentes dans lequel une partie au moins du bain fondu est soutirée en continu ou en discontinu du four de fusion.

10. Procédé selon l'une des revendications précédentes dans lequel la combustion immergée est effectuée de telle sorte qu'on génère un flux de configuration toroïdale dans le bain fondu, ladite configuration toroïdale ayant un axe de révolution central substantiellement vertical et comportant une majeure partie des flux convergeant centralement vers l'intérieur à la surface du bain fondu ; le bain fondu se déplaçant vers le bas à proximité de l'axe vertical central de révolution et étant recirculé dans un mouvement ascendant vers la surface du bain fondu, définissant ainsi un flux de configuration substantiellement toroïdale.

11. Procédé selon l'une des revendications précédentes dans lequel l'étape de fusion comporte la fusion de la fine poudre de silice, dans un four de fusion à combustion immergée tout en soumettant le bain fondu à un flux de configuration substantiellement toroïdale dans ledit bain fondu, celui-ci comportant une majeure partie des vecteurs de flux convergeant centralement vers l'intérieur à la surface du bain fondu, l'axe de révolution central du tore étant substantiellement vertical, et notamment dans lequel les vecteurs de flux changent d'orientation à proximité du fond du four de fusion, montrant des composantes orientées vers l'extérieur et ensuite vers le haut, la configuration dudit flux de bain fondu étant déterminée par simulation à l'aide d'une analyse numérique de la dynamique des fluides.

12. Procédé selon l'une des revendications précédentes dans lequel :
- des brûleurs à combustion immergée sont agencés au fond du four de fusion, dans une zone de brûleurs substantiellement annulaire, de préférence sur un cercle de brûleurs ; et/ou
- les brûleurs sont agencés à une distance entre brûleurs adjacents de 250 - 1250 mm, avantageusement de 500 - 900 mm, de préférence de 600 - 800, plus particulièrement de 650 - 750 mm.

13. Procédé selon l'une des revendications précédentes dans lequel chaque axe de brûleur et/ou un vecteur de vitesse du bain fondu se déplaçant vers le haut au-dessus ou à proximité des brûleurs immergés est légèrement incliné par rapport à la verticale, par exemple d'un angle qui est ≧ 1°, ≧ 2°, ≧ 3° ou ≧ 5° et/ou qui est ≦ 30°, de préférence ≦ 15°, plus particulièrement ≦ 10°, notamment vers le centre du four de fusion.

14. Procédé selon l'une des revendications précédentes dans lequel chaque axe central de brûleur est incliné d'un angle de tourbillonnement par rapport à un plan vertical passant à travers un axe central vertical du four de fusion et le centre du brûleur, l'angle de tourbillonnement étant ≧ 1° , ≧ 2° , ≧ 3°, ≧ 5° et/ou ≦ 30°, ≦ 20°, ≦ 15° ou ≦ 10°.
